# EUROPÄISCHE PATENTSCHRIFT

(11) **EP 4 196 688 B1**
(45) Veröffentlichungstag und Bekanntmachung des Hinweises auf die Patenterteilung: **07.01.2026**
(21) Anmeldenummer: 21746392.6
(22) Anmeldetag: 13.07.2021
(51) Int. Cl.: F16B 2/08, F16B 2/06, F16B 2/18, F16B 2/24, F16B 3/06, F16B 21/12, F16B 47/00, F16B 1/00

(54) **VERBINDUNGSVORRICHTUNG ZUM LÖSBAREN VERBINDEN ZWEIER BAUGRUPPEN**
CONNECTING DEVICE FOR DETACHABLY CONNECTING TWO ASSEMBLIES
DISPOSITIF DE LIAISON PERMETTANT DE RELIER DE MANIÈRE AMOVIBLE DEUX ENSEMBLES

(30) Priorität: 17.08.2020 DE 102020210432
(43) Veröffentlichungstag der Anmeldung: 21.06.2023
(73) Patentinhaber: Fidlock GmbH, 30659 Hannover (DE)
(72) Erfinder: BOTKUS, Breido, 30175 Hannover (DE); HÜWEK, Florian, 30449 Hannover (DE); RICHTER, Friedemann, 30173 Hannover (DE)
(74) Vertreter: Maikowski & Ninnemann Patentanwälte Partnerschaft mbB
(86) Internationale Anmeldenummer: PCT/EP2021/069445
(87) Internationale Veröffentlichungsnummer: WO 2022/037849

(56) Entgegenhaltungen:
- DE-U1- 202015 103 406
- US-A1- 2008 296 333
- US-A1- 2009 208 277
- US-A1- 2014 265 765
- US-B2- 8 657 317
- US-B2- 9 255 591

## Beschreibung

Die Erfindung betrifft eine Verbindungsvorrichtung zum lösbaren Verbinden zweier Baugruppen nach dem Oberbegriff des Anspruchs 1.

Eine derartige Verbindungsvorrichtung weist ein Verschlussmodul auf, das einer ersten der Baugruppen zugeordnet und mit einer zweiten der Baugruppen zur Herstellung einer Verbindung zwischen den Baugruppen lösbar verbindbar ist.

Eine derartige Verbindungsvorrichtung kann beispielsweise an einem Fahrzeug, zum Beispiel einem Fahrrad, zum Einsatz kommen, um eine Baugruppe, zum Beispiel ein elektronisches Gerät wie ein Mobiltelefon oder ein Navigationssystem, an dem Fahrzeug zu befestigen. Über das Verschlussmodul erfolgt hierbei eine Verbindung mit der zu befestigenden Baugruppe, zum Beispiel dem elektronischen Gerät. Das Verschlussmodul ist hierzu an dem Fahrzeug anzuordnen, sodass über das Verschlussmodul eine (lösbare) Verbindung mit dem Fahrzeug hergestellt werden kann.

Aus der WO 2019/086648 A2 ist eine Verbindungsvorrichtung bekannt, bei der ein Verschlussmodul ein Unterdruckelement aufweist, das an eine zugeordnete Ansetzkomponente angesetzt werden kann, um in einer verbundenen Stellung durch Unterdruck mit der Ansetzkomponente zusammenzuwirken. Ein Verstellelement kann verstellt werden, um eine Strömungsöffnung freizugeben, um das Verschlussmodul von der Ansetzkomponente zu lösen.

Eine aus der EP 0 689 966 B1 bekannte Verbindungsvorrichtung weist eine magnetische Kontaktplatte auf, an der ein Saugnapf angeordnet ist. Mittels der Verbindungsvorrichtung kann ein Skiträger an einem Fahrzeugdach eines Fahrzeugs befestigt werden.

Wünschenswert bei einer Verbindungsvorrichtung ist, dass das Verschlussmodul in einfacher Weise an einer zugeordneten ersten der Baugruppen festgelegt werden kann, um eine Verbindung zwischen dieser ersten Baugruppe und einer zweiten der Baugruppen herzustellen. Beispielsweise soll das Verschlussmodul fest und belastbar an einem Fahrzeug, zum Beispiel einem Fahrrad befestigt werden, um eine weitere Baugruppe wie ein elektronisches Gerät über die Verbindungsvorrichtung in komfortabler, sicherer Weise mit dem Fahrzeug verbinden zu können.

Die US 8,657,317 beschreibt einen Schnellverschluss für ein Schutzblech eines Fahrrads. Bei dem Schnellverschluss wird ein erstes Teil mit einer Rahmenstange eines Fahrrads verschraubt. Über einen Bügel wird ein zweites Teil mit dem ersten Teil verbunden, um dadurch ein an dem zweiten Teil angeordnetes Schutzblech mit dem ersten Teil und darüber mit der Rahmenstange zu verbinden.

Weiterhin zeigt die DE 20 2015 103406 U1 ein Verbindungssystem zum lösbar kraftschlüssigen Koppeln eines ersten Körpers an ein fluidführendes System über eine fluiddichte Membran, wobei das Verbindungssystem die Membran und einen zweiten Körper mit einem Innenraum aufweist, der an das fluidführende System gekoppelt ist, und wobei der erste Körper ein erstes Ende mit einem Flansch aufweist, wobei der zweite Körper ein zweites Ende mit einem Innenraum, einer umlaufenden Wand und einer Öffnung aufweist, wobei die umlaufende Wand einen um die Öffnung umlaufenden Membrankontaktabschnitt aufweist, der die Membran kontaktiert, wobei (a) das Verbindungssystem ein scheibenförmiges Halteelement mit einem Durchlass, einer ersten Seite, einer zweiten Seite und einem peripheren Außenrand aufweist, wobei die erste Seite und/oder der Durchlass des Halteelements an die Membran gekoppelt ist/sind und wobei die zweite Seite des Halteelements dazu ausgelegt ist, an den Flansch des ersten Körpers gekoppelt zu werden, oder (b) das zweite Ende des zweiten Körpers ein flanschartiges, scheibenförmiges Halteelement mit einem peripheren Außenrand definiert, wobei das flanschartige, scheibenförmige Halteelement die Membran kontaktiert und dazu ausgelegt ist, an den Flansch des ersten Körpers gekoppelt zu werden und wobei der erste Körper fluidführend ist, und wobei das Verbindungssystem ein Verbindungselement aufweist, das dazu ausgelegt ist, lösbar den peripheren Außenrand des Halteelements und den Flansch des ersten Körpers zumindest teilweise zu umgreifen, sodass das Halteelement mit Hilfe des Verbindungselements kraftschlüssig am ersten Körper fixiert ist.

Aufgabe der vorliegenden Erfindung ist es, eine Verbindungsvorrichtung zur Verfügung zu stellen, die einfach verwendbar, insbesondere einfach an einer zugeordneten Baugruppe anzuordnen ist, um eine lösbare Verbindung zwischen Baugruppen herzustellen.

Diese Aufgabe wird durch einen Gegenstand mit den Merkmalen des Anspruchs 1 gelöst. Demnach weist die Verbindungsvorrichtung ein mit der ersten der Baugruppen verbindbares Koppelteil und ein Verbindungselement zum Verbinden des Koppelteils mit dem Verschlussmodul auf. Das Verbindungselement weist zumindest einen Eingriffsabschnitt auf, der ausgebildet ist, zum Verbinden des Koppelteils mit dem Verschlussmodul in eine Eingriffsrichtung quer zur Ansetzrichtung formschlüssig und/oder kraftschlüssig mit zumindest einen von dem Verschlussmodul und dem Koppelteil zusammenzuwirken.

Das Verschlussmodul dient dazu, eine lösbare Verbindung zwischen zwei Baugruppen herzustellen. Das Verschlussmodul ist hierzu fest an einer zugeordneten, ersten Baugruppe anzuordnen und soll eine lösbare Verbindung mit einer zweiten Baugruppe herstellen, sodass über das Verschlussmodul eine Verbindung zwischen den Baugruppen geschaffen ist.

Das Verschlussmodul kann hierbei eine Verbindung mit der zweiten Baugruppe nach ganz unterschiedlichen Wirkprinzipien herstellen, beispielsweise eine Verbindung mittels mechanischer Verrastung, mittels magnetischer Anziehungskraft, mittels Unterdruck oder einer Kombination solcher unterschiedlicher Wirkprinzipien.

Während das Verschlussmodul einerseits dazu ausgestaltet ist, eine (lösbare) Verbindung mit der zweiten Baugruppe herzustellen, ist das Verschlussmodul andererseits über das Koppelteil mit der ersten Baugruppe verbindbar und somit in einer gekoppelten Stellung an der ersten Baugruppe festgelegt. Über das Koppelteil erfolgt somit eine Kopplung des Verschlussmoduls mit der ersten Baugruppe, sodass über das an der ersten Baugruppe befestigte Verschlussmodul eine Verbindung der zweiten Baugruppe mit der ersten Baugruppe erfolgen kann.

Um eine einfache, belastbare Verbindung zwischen dem Koppelteil und dem Verschlussmodul herzustellen, die gegebenenfalls auch lösbar ist, um beispielsweise das Verschlussmodul auszutauschen und durch ein anderes Verschlussmodul zu ersetzen, ist das Verbindungselement vorgesehen, das mit einem oder mehreren Eingriffsabschnitten formschlüssig und/oder kraftschlüssig mit dem Verschlussmodul und/oder dem Koppelteil zusammenwirkt und dadurch eine Verbindung zwischen dem Verschlussmodul und dem Koppelteil herstellt. Ein formschlüssiger Eingriff oder eine kraftschlüssige Anlage erfolgt quer zur Ansetzrichtung, also in einer quer zur Ansetzrichtung erstreckten Ebene. Über die durch das Verbindungselement hergestellte formschlüssige und/oder kraftschlüssige Verbindung werden das Verschlussmodul und das Koppelteil zum Beispiel unter Anlage von Auflageflächen aneinander gehalten.

In einer Ausgestaltung umgreift das Verbindungselement beispielsweise das Verschlussmodul und/oder das Koppelteil um die Ansetzrichtung. Hierunter ist zu verstehen, dass das Verbindungselement mit einem Winkel größer als 180° um die Ansetzrichtung herum greift und dabei mit dem Verschlussmodul und/oder dem Koppelteil in Eingriff steht. Das Verbindungselement kann U- oder C-förmig ausgebildet sein, kann aber auch (zumindest nahezu) umfänglich geschlossen sein.

In einer Ausgestaltung weist zumindest eines von dem Verschlussmodul und dem Koppelteil einen Koppelabschnitt auf. Das Verbindungselement ist hierbei dazu ausgebildet, mit dem Koppelabschnitt zum Verbinden des Koppelteils mit dem Verschlussmodul formschlüssig und/oder kraftschlüssig zusammenzuwirken.

In einer Ausgestaltung weist das Verschlussmodul einen ersten Koppelabschnitt auf, während das Koppelteil einen zweiten Koppelabschnitt aufweist. Die Koppelabschnitte werden aneinander angesetzt und werden - wenn die Verbindung zwischen dem Verschlussmodul und dem Koppelteil über das Verbindungselement hergestellt ist - über das Verbindungselement formschlüssig und/oder kraftschlüssig miteinander verbunden, indem das Verbindungselement jeweils formschlüssig und/oder kraftschlüssig mit den Koppelabschnitten zusammenwirkt, beispielsweise indem das Verbindungselement die Koppelabschnitte umgreift.

Denkbar ist jedoch auch, dass lediglich eines von dem Verschlussmodul und dem Koppelteil einen Koppelabschnitt aufweist und das Verbindungselement ausschließlich mit dem Koppelabschnitt des einen von dem Verschlussmodul und dem Koppelteil zusammenwirkt, indem das Verbindungselement mit einem oder mehreren Eingriffsabschnitten formschlüssig und/oder kraftschlüssig mit dem Koppelabschnitt zusammenwirkt. In diesem Fall besteht ein Formschluss und/oder Kraftschluss zwischen dem Verbindungselement und dem Koppelabschnitt an dem einen von dem Verschlussmodul und dem Koppelteil, wobei das Verbindungselement beispielsweise fest (und unlösbar) mit dem anderen von dem Verschlussmodul und dem Koppelteil verbunden ist.

In einer Ausgestaltung weist der Koppelabschnitt eine Spannfläche zum Wechselwirken mit dem Verbindungselement auf. Über eine solche Spannfläche wirkt das Verbindungselement formschlüssig und/oder kraftschlüssig mit dem Koppelabschnitt zusammen, sodass darüber eine Verbindung mit dem Verbindungselement hergestellt ist.

In einer Ausgestaltung ist die Spannfläche schräg zur Ansetzrichtung geneigt. Erstreckt sich die Spannfläche umfänglich um die Ansetzrichtung, so kann die Spannfläche beispielsweise eine konische Grundform aufweisen, wobei die Spannfläche auch im Querschnitt quer zur Ansetzrichtung mehreckig, beispielsweise viereckig oder sechseckig, ausgebildet sein kann und somit nicht notwendigerweise rotationssymmetrisch ist.

Die Neigung der Spannfläche kann hierbei derart sein, dass das Verbindungselement über den zumindest einen Eingriffsabschnitt eine Kraft an der Spannfläche bewirkt, die das Verschlussmodul und das Koppelteil gegeneinander drückt und somit in eine aufeinander zu gerichtete Belastungsrichtung zueinander belastet. An der Spannfläche erfolgt somit eine Kraftumlenkung, wobei das Verbindungselement beispielsweise eine radiale Kraft radial zur Ansetzrichtung einleiten kann, die an der Spannfläche in eine axiale Kraft zum Aneinanderdrücken des Verschlussmoduls und des Koppelteils umgelenkt wird. Bei einer solchen Ausgestaltung der Spannfläche können das Verschlussmodul und das Koppelteil somit fest und belastbar in spielfreier Weise aneinander festgelegt werden.

Zusätzlich oder alternativ zu der Spannfläche kann auch der zumindest eine Eingriffsabschnitt des Verbindungselements schräg zur Ansetzrichtung geneigt sein, wobei die Neigung derart beschaffen sein kann, dass an dem Eingriffsabschnitt eine Kraftumlenkung in Richtung eines Aneinanderdrückens des Verschlussmoduls und des Koppelteils erfolgt.

Die Spannfläche ist beispielsweise umfänglich um die Ansetzrichtung erstreckt und weist beispielsweise eine Kegelstumpfform auf. Dies ist jedoch nicht zwingend. Ein oder mehrere Spannflächen können auch lediglich abschnittsweise zum Zusammenwirken mit dem Verbindungselement an dem Koppelabschnitt geformt sein.

Weisen sowohl das Verschlussmodul als auch das Koppelteil je einen Koppelabschnitt auf, so weisen vorzugsweise beide Koppelabschnitte je eine Spannfläche, beispielsweise jeweils mit einer Neigung zur Ansetzrichtung, auf.

Die Spannfläche kann hierbei rotationssymmetrisch geformt sein, wobei dies nicht zwingend ist. Die Spannfläche kann auch von einer rotationssymmetrische Form abweichen.

Das Verbindungselement stellt eine Verbindung zwischen dem Verschlussmodul und dem Koppelteil her, indem das Verbindungselement mit zumindest einem Eingriffsabschnitt formschlüssig und/oder kraftschlüssig mit dem Verschlussmodul und/oder dem Koppelteil zusammenwirkt, beispielsweise indem das Verbindungselement das Verschlussmodul und/oder das Koppelteil umgreift. Das Verbindungselement kann beispielsweise durch ein umfänglich geöffnetes Bügelelement ausgebildet sein, das an das Verschlussmodul und/oder das Koppelteil anzusetzen ist. Das Bügelelement kann eine C-Form oder eine U-Form aufweisen. Das Bügelelement kann hierbei zumindest abschnittsweise elastisch ausgebildet sein, um eine Spannwirkung an dem Verschlussmodul und/oder dem Koppelteil zu bewirken. Das Bügelelement kann aber auch im Wesentlichen starr ausgebildet sein, insbesondere um einen Formschluss ohne Spannwirkung herzustellen.

Ein solches Bügelelement kann beispielsweise durch einen Drahtbügel verwirklicht sein, der mit einer aus Draht gefertigten Strebe um die Ansetzrichtung herum erstreckt ist und dazu ausgestaltet ist, mit dem Verschlussmodul und/oder dem Koppelteil zum Herstellen der Verbindung zusammenzuwirken.

Anstatt als Drahtbügel kann das Bügelelement zum Beispiel auch als Stanz-Biege-Teil zum Beispiel aus Blech gefertigt sein.

Ein solches Bügelelement kann beispielsweise quer zur Ansetzrichtung so an das Verschlussmodul und das Koppelteil angesetzt werden, dass das Bügelelement in einer radialen Richtung gespannt wird und durch eine solche Spannwirkung das Verschlussmodul und das Koppelteil gegeneinander verspannt, um auf diese Weise eine Verbindung zwischen dem Verschlussmodul und dem Koppelteil herzustellen.

In anderer Ausgestaltung kann das Verbindungselement auch durch ein Ringelement ausgebildet sein, das in einer verbundenen Stellung das Verschlussmodul und/oder das Koppelteil ringförmig umgibt.

Ein solches Ringelement kann integral und einstückig geformt sein. Ein solches Ringelement kann aber auch aus einzelnen Segmenten zusammengesetzt sein, die beispielsweise gelenkig miteinander verbunden sind.

Ein solches Ringelement kann im Querschnitt quer zur Ansetzrichtung eine kreisrunde Form aufweisen, kann aber auch abweichend von einer solchen kreisrunden Form geformt sein.

Das Ringelement kann umfänglich geschlossen oder auch an einem umfänglichen Ort geöffnet sein.

Generell kann das Verbindungselement mit dem Verschlussmodul und/oder dem Koppelteil verspannt sein, indem das Verbindungselement beispielsweise unter eigenelastischer Vorspannung an dem Verschlussmodul und/oder dem Koppelteil anliegt oder indem über eine zusätzliche Spanneinrichtung eine Spannkraft an dem Verbindungselement bewirkt wird.

Denkbar ist aber auch, dass das Verbindungselement nicht mit dem Verschlussmodul und/oder dem Koppelteil verspannt ist und lediglich um das Verschlussmodul und/oder das Koppelteil herum greift, ohne dabei jedoch eine Spannkraft an dem Verschlussmodul und/oder dem Koppelteil zu bewirken. In diesem Fall kann das Verbindungselement beispielsweise formschlüssig zum axialen Sichern der Verbindung zwischen dem Verschlussmodul und dem Koppelteil wirken.

Ist das Verbindungselement zum Verbinden des Verschlussmoduls mit dem Koppelteil zu verspannen, so kann das Verbindungselement beispielsweise einen umfänglich um das Verschlussmodul und/oder das Koppelteil herumgreifenden, den zumindest einen Eingriffsabschnitt ausbildenden Körper und eine an Enden des Körpers wirkende Spanneinrichtung zum Spannen des Körpers aufweisen. Die Spanneinrichtung kann beispielsweise durch ein Spannelement in Form einer mit den Enden des Körpers zu verschraubenden Schraube oder durch einen Spannhebel in Form eines Exzenterhebels spannbar sein, sodass über die Spanneinrichtung eine Spannkraft in den Körper und darüber in das Verschlussmodul und/oder in das Koppelteil eingeleitet werden kann.

Das Verbindungselement kann in einer Ausgestaltung aber beispielsweise auch durch ein längserstrecktes, zum Beispiel quer zur Ansetzrichtung weisendes Element gebildet sein, das so mit dem Verschlussmodul und/oder dem Koppelteil in Eingriff gebracht werden kann, dass ein Formschluss zwischen dem Verschlussmodul und dem Koppelteil hergestellt wird. Beispielsweise kann das Verbindungselement nach Art eines Splints ausgestaltet sein.

Das Verschlussmodul weist eine erste Auflagefläche und das Koppelteil eine entlang einer Ansetzrichtung an die erste Auflagefläche ansetzbare, zweite Auflagefläche auf. Mit den Auflageflächen können das Verschlussmodul und das Koppelteil aneinander angesetzt werden, wobei auch denkbar ist, das zwischen den Auflagenflächen ein Zwischenelement, zum Beispiel in Form eines elastischen Elements oder eines Abschnitts des Verbindungselements, angeordnet ist.

Die erste Auflagefläche und die zweite Auflagefläche sind in einer aneinander angesetzten Stellung um die Ansetzrichtung zueinander drehbar. Wenn das Verschlussmodul mit dem Koppelteil über das Verbindungselement verbunden ist, kann das Verschlussmodul somit zu dem Koppelteil verdreht werden, sodass eine Drehstellung des Verschlussmoduls zu dem Koppelteil angepasst werden kann. Das Verbindungselement legt das Verschlussmodul somit axial entlang der Ansetzrichtung zu dem Koppelteil fest, ermöglicht dabei aber ein Verdrehen der Auflageflächen zueinander und somit ein Verdrehen des Verschlussmoduls zu dem Koppelteil.

Die Auflageflächen können hierbei frei und kontinuierlich zueinander verdrehbar sein. An den Auflageflächen kann aber auch zum Beispiel eine Rastung geformt sein, sodass die Auflageflächen rastend zwischen diskreten, durch die Rastung vorgegebenen Drehstellungen zueinander verdrehbar sind.

In einer Ausgestaltung ist an der ersten Auflagefläche zumindest eine erste Zentriereinrichtung und an der zweiten Auflagefläche zumindest eine zweite Zentriereinrichtung angeordnet. Die Zentriereinrichtungen stehen in einer aneinander angesetzten Stellung formschlüssig miteinander in Eingriff derart, dass über die Zentriereinrichtungen die erste Auflagefläche und die zweite Auflagefläche relativ zur Ansetzrichtung, insbesondere in einer zur Ansetzrichtung radialen Ebene, zueinander zentriert sind. Über solche Zentriereinrichtungen können die Auflageflächen somit in definierter, zentrierter Weise aneinander angesetzt werden, wobei die Zentriereinrichtungen beispielsweise ein Verdrehen der Auflageflächen zueinander um die Ansetzrichtung ermöglichen können oder, alternativ, die Auflageflächen drehfest zueinander festlegen.

Die Zentriereinrichtungen können beispielsweise einerseits durch einen um die Ansetzrichtung erstreckten Steg und andererseits durch eine ringförmige Eingriffsnut geformt sein. Die Zentriereinrichtungen können aber auch einerseits durch einen Zapfen und andererseits durch eine zugeordnete Eingriffsöffnung geformt sein.

In einer Ausgestaltung sind die erste Auflagefläche und/oder die zweite Auflagefläche axial entlang der Ansetzrichtung elastisch federnd ausgestaltet. Dies kann dadurch erreicht werden, dass die erste Auflagefläche und/oder die zweite Auflagefläche beispielsweise aus einem elastischen Material geformt sind oder (axial entlang der Ansetzrichtung) elastisch federnd gelagert sind. Dadurch, dass die erste Auflagefläche und/oder die zweite Auflagefläche axial federnd sind, können beispielsweise Toleranzen ausgeglichen werden, und das Verschlussmodul und das Koppelteil können axial spielfrei zueinander festgelegt werden.

In einer Ausgestaltung weist das Verschlussmodul ein erstes Magnetelement und das Koppelteil ein zweites Magnetelement auf. Das erste Magnetelement und das zweite Magnetelement wirken bei Ansetzen des Verschlussmoduls und des Koppelteils aneinander magnetisch anziehend zusammen, sodass das Verschlussmodul und das Koppelteil zueinander hin gezogen werden, wenn das Verschlussmodul und das Koppelteil aneinander angesetzt werden.

Die Magnetelemente können hierbei zentrierend wirken, indem die Magnetelemente das Verschlussmodul und das Koppelteil so aneinander anziehen, dass das Verschlussmodul und das Koppelteil in eine bestimmungsgemäße Position zueinander gebracht werden.

Die Magnetelemente können beispielsweise jeweils durch ein oder mehrere Permanentmagnete geformt sein, wobei die Magnetelemente des Verschlussmoduls und des Koppelteils mit ungleichnamigen Polen aufeinander zu weisen und dadurch magnetisch anziehend zusammenwirken. In anderer Ausgestaltung kann aber auch eines der Magnetelemente durch einen oder mehrere Permanentmagnete geformt sein, während das andere der Magnetelemente beispielsweise durch einen ferromagnetischen Anker gebildet ist.

Das Koppelteil ist durch eine sogenannte Ahead-Kappe zur Anordnung an einer Vorderradgabel des Fahrrads ausgebildet, wie dies beispielsweise in der US 5,095,770 und der US 8,662,517 beschreiben ist. Bei einer solchen Ahead-Kappe handelt es sich um eine Kappe, die an einem oberen Ende der Vorderradgabel eines Fahrrads anzubringen ist einen Vorderbau zur Verbindung mit einer Lenkerstange an der Vorderradgabel festlegt.

Bei der Verbindungsvorrichtung wird eine Verbindung zwischen den aneinander zu befestigenden Baugruppen dadurch hergestellt, dass das einer ersten der Baugruppen zugeordnete Verschlussmodul an die andere, zweite der Baugruppen angesetzt wird. Die andere, zweite Baugruppe kann hierbei ein weiteres, zweites Verschlussmodul umfassen, das mit dem Verschlussmodul gefügt werden kann, zum Beispiel um eine rastende, magnetische und/oder durch Unterdruckwirkung bestehende Verbindung zwischen den Verschlussmodulen herzustellen. Zum Herstellen einer ersten Verbindung können die Verschlussmodule beispielsweise rastend zusammenwirken. Zum Herstellen einer magnetischen Verbindung können die Verschlussmodule jeweils ein oder mehrere Magnetelemente aufweisen, die magnetisch anziehend zusammenwirken. Zum Herstellen einer Unterdruckverbindung kann bei miteinander verbundenen Verschlussmodulen ein Unterdruck zwischen den Verschlussmodulen wirken, aufgrund dessen die Verschlussmodule aneinandergehalten sind. Die Verbindung ist jeweils lösbar, sodass die Verschlussmodule voneinander abgenommen werden können, um die Baugruppen voneinander zu trennen.

Beispielsweise kann das Verschlussmodul, in einer Ausgestaltung, ein Unterdruckelement aufweisen, das an die zweite der Baugruppen zur Herstellung einer Verbindung zwischen den Baugruppen ansetzbar ist. Das Unterdruckelement ist ausgebildet, in einer verbundenen Stellung der Baugruppen durch Unterdruckwirkung eine Haltekraft zwischen den Baugruppen bereitzustellen. Beim Ansetzen entsteht ein abgedichteter Raum zwischen dem Unterdruckelement und der zweiten Baugruppe, beispielsweise einer durch einen Flächenabschnitt verwirklichten Ansetzbaugruppe der zweiten Baugruppe, sodass die Baugruppen aufgrund einer Unterdruckwirkung aneinander gehalten sind. Solch eine Verbindung kann insbesondere belastbar auf Stoß sein, sodass über die Verbindungsvorrichtung Stoßkräfte aufgefangen und abgeleitet werden können.

Ein solches Unterdruckelement kann beispielsweise durch ein zumindest abschnittsweise elastisches Napfelement ausgebildet sein, das beim Ansetzen des Verschlussmoduls an die zweite Baugruppe elastisch verformt wird.

In der verbundenen Stellung der Verbindungsvorrichtung können das Unterdruckelement und die zweite Baugruppe zum Beispiel flächig aneinander anliegen, sodass effektiv kein Raum zwischen dem Unterdruckelement und der zweiten Baugruppe besteht. Bei einer Belastung der Baugruppen relativ zueinander kann jedoch eine Kraft auf das Verschlussmodul relativ zu der zweiten Baugruppe wirken, die in Richtung einer Vergrößerung oder Schaffung eines zwischen dem Unterdruckelement und der zweiten Baugruppe gebildeten Raums wirkt, was einen Unterdruck zwischen dem Unterdruckelement und der zweiten Baugruppe bewirkt und somit Haltekräfte erzeugt, die das Unterdruckelement an der zweiten Baugruppe halten und tendenziell größer werden, je stärker das Verschlussmodul gegenüber der zweiten Baugruppe belastet wird. Das Verschlussmodul wird somit aufgrund Unterdruckwirkung an der zweiten Baugruppe gehalten, wenn das Verschlussmodul an die zweite Baugruppe angesetzt ist.

In einer Ausgestaltung weist das Verschlussmodul ein Gehäuse und eine in dem Gehäuse geformte Strömungsöffnung zum Freigeben eines Strömungswegs in einen Raum zwischen der zweiten der Baugruppen und dem Unterdruckelement auf. In einer verbundenen Stellung, in der das Verschlussmodul an der zweiten der Baugruppen angeordnet ist, ist die Strömungsöffnung verschlossen, sodass eine Unterdruckwirkung zwischen dem Unterdruckelement und der zweiten Baugruppe eine belastbare Verbindung zwischen den Baugruppen bewirkt. Durch Öffnen der Strömungsöffnung kann Luft zwischen das Unterdruckelement und die zweite Baugruppe strömen, sodass eine Unterdruckwirkung aufgehoben wird und das Verschlussmodul von der zweiten Baugruppe einfacher, komfortabler Weise gelöst werden kann.

Die Strömungsöffnung kann beispielsweise in einem Boden des Gehäuses geformt sein, der von dem beispielsweise als elastisches Napfelement geformten Unterdruckelement umgeben ist, indem sich das Unterdruckelement umfänglich um den Boden herum erstreckt und somit den Boden umfänglich einschließt. Der Boden ist in der verbundenen Stellung, in der das Verschlussmodul an die zweite Baugruppe angesetzt ist, der zweiten Baugruppe zugewandt, insbesondere einer durch einen Flächenabschnitt verwirklichten Ansetzbaugruppe der zweiten Baugruppe, an die das Unterdruckelement angesetzt ist.

In einer Ausgestaltung weist das Verschlussmodul ein verstellbar an dem Gehäuse angeordnetes Verstellteil auf, das zum Freigeben der Strömungsöffnung verstellbar ist. Das Verstellteil kann beispielsweise nach Art eines Hebels geformt und kippbar an dem Gehäuse gelagert sein. An dem Verstellteil kann beispielsweise ein Verschlusselement angeordnet sein, das gemeinsam mit dem Verstellteil bewegt werden kann, wobei das Verschlusselement in einer ersten Stellung des Verstellteils die Strömungsöffnung verschließt und durch Verstellen des Verstellteils so zu der Strömungsöffnung bewegbar ist, dass die Strömungsöffnung freigegeben und somit ein Strömungsweg in einen Raum zwischen dem Unterdruckelement und der zweiten Baugruppe geöffnet wird.

Die Bedienung des Verstellelements kann vorzugsweise händisch durch einen Nutzer erfolgen, indem der Nutzer auf das Verstellelement einwirkt. Die Bedienung des Verstellelements kann hierbei beispielsweise mit den Fingerspitzen erfolgen, indem der Nutzer an dem Verstellelement drückt oder zieht und dadurch das Verstellelement bewegt.

In einer Ausführungsform weist das Verschlussmodul eine Magnetanordnung zum Zusammenwirken mit der zweiten Baugruppe auf. Die Magnetanordnung des Verschlussmoduls wirkt derart mit einer Magnetanordnung der zweiten Baugruppe zusammen, dass ein Ansetzen des Verschlussmoduls an die zweite Baugruppe magnetisch unterstützt wird und die Verbindung zwischen dem Verschlussmodul und der zweiten Baugruppe somit unter magnetische Anziehung des Verschlussmoduls und der zweiten Baugruppe aneinander hergestellt werden kann.

Die Magnetanordnung des Verschlussmoduls kann beispielsweise dazu dienen, beim Ansetzen des Verschlussmoduls und der zweiten Baugruppe aneinander eine magnetische Anziehungskraft bereitzustellen, sodass - bei Verwirklichung des Verschlussmoduls mit einem Unterdruckelement - die Herstellung eines Unterdrucks in magnetisch unterstützter Weise (vorzugsweise selbsttätig) erfolgt. Bei Ansetzen werden das Verschlussmodul und die zweite Baugruppe aufgrund der magnetischen Wechselwirkung magnetisch anziehend zueinander hingezogen, sodass ein (Beinahe-) Vakuum zwischen dem Unterdruckelement und der zweiten Baugruppe bewirkt wird, beispielsweise indem das beispielsweise als elastisches Napfelement ausgebildete Unterdruckelement gegen die zweite Baugruppe gepresst wird.

Die Magnetanordnung des Verschlussmoduls kann beispielsweise durch einen Permanentmagneten oder auch eine Anordnung von mehreren Permanentmagneten gebildet sein. Ebenso kann die zweite Baugruppe eine Magnetanordnung in Form eines Permanentmagneten oder einer Anordnung von mehreren Permanentmagneten aufweisen. Denkbar ist aber auch, dass eine Magnetanordnung (des Verschlussmoduls oder der zweiten Baugruppe) durch einen Permanentmagneten oder eine Anordnung von mehreren Permanentmagneten gebildet ist, während die andere Magnetanordnung durch einen magnetischen Anker aus einem ferromagnetischen Material gebildet ist.

Die Verbindungsvorrichtung ist beispielsweise dazu ausgebildet, ein elektronisches Gerät an einer zugeordneten Baugruppe zu befestigen. Beispielsweise kann die Verbindungsvorrichtung dazu dienen, ein Mobiltelefon oder ein Navigationsgerät oder ein anderes elektronisches Kommunikations- oder Informationsgerät in oder an einem Fahrzeug zu befestigen.

Der der Erfindung zugrunde liegende Gedanke soll nachfolgend anhand der in den Figuren dargestellten Ausführungsbeispiele näher erläutert werden. Es zeigen:
- Fig. 1: eine Explosionsansicht eines Ausführungsbeispiels einer Verbindungsvorrichtung zum Verbinden zweier Baugruppen miteinander;
- Fig. 2A: eine Seitenansicht der Verbindungsvorrichtung;
- Fig. 2B: eine Schnittansicht entlang der Linie A-A gemäß Fig. 2A;
- Fig. 3A: eine Ansicht eines Ausführungsbeispiels eines Verbindungselements zum Verbinden eines Verschlussmoduls und eines Koppelteils der Verbindungsvorrichtung miteinander;
- Fig. 3B: eine Draufsicht auf das Verbindungselement gemäß Fig. 3A;
- Fig. 4A: eine Ansicht eines anderen Ausführungsbeispiels eines Verbindungselements zum Verbinden eines Verschlussmoduls und eines Koppelteils der Verbindungsvorrichtung miteinander;
- Fig. 4B: eine Draufsicht auf das Verbindungselement gemäß Fig. 4A;
- Fig. 5A: eine Ansicht eines wiederum anderen Ausführungsbeispiels eines Verbindungselements zum Verbinden eines Verschlussmoduls und eines Koppelteils der Verbindungsvorrichtung miteinander;
- Fig. 5B: eine Draufsicht auf das Verbindungselement gemäß Fig. 5A;
- Fig. 6A: eine Ansicht eines wiederum anderen Ausführungsbeispiels eines Verbindungselements zum Verbinden eines Verschlussmoduls und eines Koppelteils der Verbindungsvorrichtung miteinander;
- Fig. 6B: eine Draufsicht auf das Verbindungselement gemäß Fig. 6A;
- Fig. 7: eine Explosionsansicht eines Koppelabschnitts eines Verschlussmoduls zusammen mit einem Koppelteil und einem Verbindungselement einer Verbindungsvorrichtung;
- Fig. 8A: eine Seitenansicht des Koppelabschnitts zusammen mit dem Koppelteil und dem Verbindungselement;
- Fig. 8B: eine Schnittansicht entlang der Linie A-A gemäß Fig. 8A;
- Fig. 9: eine gesonderte Ansicht des Koppelteils;
- Fig. 10: eine andere Ansicht des Koppelteils;
- Fig. 11A: eine Draufsicht auf das Koppelteil;
- Fig. 11B: eine Schnittansicht entlang der Linie A-A gemäß Fig. 11A;
- Fig. 12: eine Explosionsansicht eines anderen Ausführungsbeispiels eines Koppelabschnitts des Verschlussmoduls zusammen mit einem Koppelteil und einem Verbindungselement;
- Fig. 13A: eine Seitenansicht des Koppelabschnitts zusammen mit dem Koppelteil und dem Verbindungselement gemäß Fig. 12;
- Fig. 13B: eine Schnittansicht entlang der Linie A-A gemäß Fig. 13A;
- Fig. 14: eine Explosionsansicht eines anderen Beispiels eines Koppelabschnitts des Verschlussmoduls zusammen mit einem Koppelteil und einem Verbindungselement;
- Fig. 15A: eine Seitenansicht des Koppelabschnitts zusammen mit dem Koppelteil und dem Verbindungselement gemäß Fig. 14;
- Fig. 15B: eine Schnittansicht entlang der Linie A-A gemäß Fig. 15A;
- Fig. 16: eine Explosionsansicht eines anderen Ausführungsbeispiels eines Koppelabschnitts des Verschlussmoduls zusammen mit einem Koppelteil und einem Verbindungselement;
- Fig. 17A: eine Seitenansicht des Koppelabschnitts zusammen mit dem Koppelteil und dem Verbindungselement gemäß Fig. 16;
- Fig. 17B: eine Schnittansicht entlang der Linie A-A gemäß Fig. 17A;
- Fig. 18: eine schematische Ansicht eines anderen Ausführungsbeispiels eines Koppelabschnitts zusammen mit einem Koppelteil und einem Verbindungselement; und
- Fig. 19: eine schematische Ansicht einer Baugruppe in Form eines Fahrrads mit einem daran angeordneten Koppelteil in Form einer Ahead-Kappe.

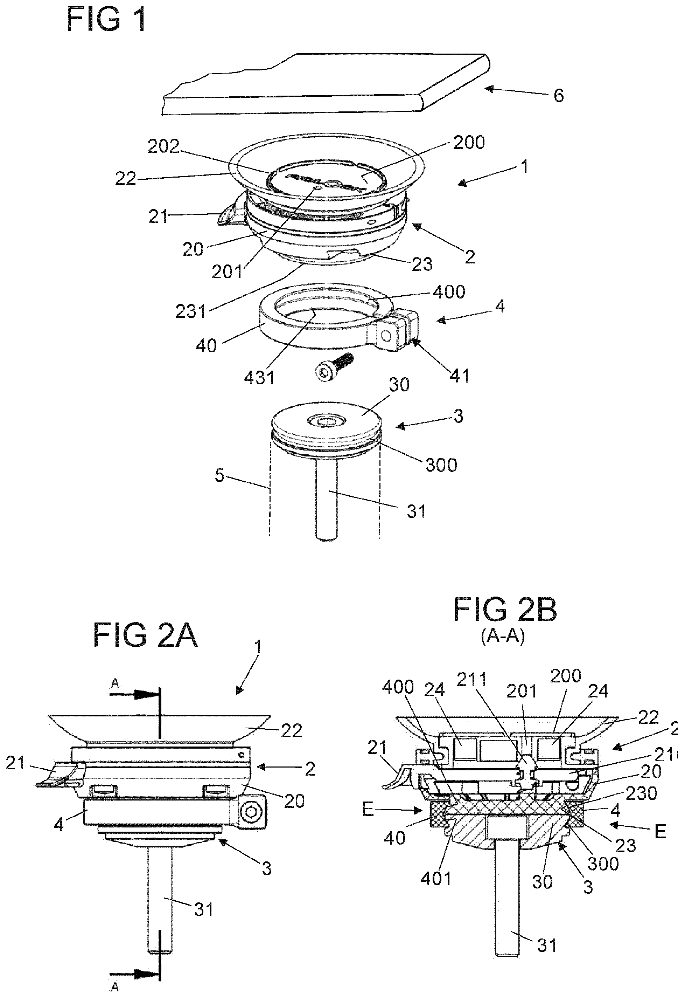

Fig. 1 und 2A, 2B zeigen Ansichten eines Ausführungsbeispiels einer Verbindungsvorrichtung 1, die ein Verschlussmodul 2 zum Verbinden mit einer Baugruppe 6, zum Beispiel einem elektronischen Gerät wie einem Mobiltelefon oder einem Navigationsgerät, aufweist. Über das Verschlussmodul 2 kann eine lösbare Verbindung mit der Baugruppe 6 hergestellt werden, wobei in einer verbundenen Stellung die Baugruppe 6 fest und belastbar an dem Verschlussmodul 2 gehalten ist, die Verbindung aber zum Abnehmen der Baugruppe 6 von dem Verschlussmodul 2 in einfacher, komfortabler Weise gelöst werden kann.

Die Verbindungsvorrichtung 1 dient zum Anordnen der Baugruppe 6 an einer Baugruppe 5, zum Beispiel in Form eines Fahrzeugs, zum Beispiel einem Fahrrad. In einer verbundenen Stellung soll die Baugruppe 6 hierbei fest und zuverlässig an der Baugruppe 5 gehalten sein. Die Baugruppe 6 hierbei jedoch von der Baugruppe 5 abgenommen werden können, indem die Verbindung zwischen der Baugruppe 6 und dem Verschlussmodul 2 gelöst wird.

Bei dem dargestellten Ausführungsbeispiel weist das Verschlussmodul 2 ein Unterdruckelement 22 auf, das als elastisches Napfelement ausgebildet und an einem Gehäuse 20 angeordnet ist. Das Unterdruckelement 22 weist - bei dem dargestellten Ausführungsbeispiel - eine im wesentlichen rotationssymmetrische Form auf und fasst einen Boden 200 des Gehäuses 20 ein, indem eine Strömungsöffnung 201 zum Bereitstellen eines Strömungswegs in einen Raum zwischen dem Unterdruckelement 22 und der Baugruppe 6 gebildet ist.

Wie dies aus der Schnittansicht gemäß Fig. 2B ersichtlich ist, ist die Strömungsöffnung 201 in einer verbundenen Stellung, in der das Verschlussmodul 2 mit der Baugruppe 6 verbunden ist, durch ein Verschlusselement 211 verschlossen. Das Verschlusselement 211 ist an einem Verstellteil 21 angeordnet, das mit einem Lagerende 210 verkippbar an dem Gehäuse 20 gelagert ist und so gegenüber dem Gehäuse 20 nach außen hin vorsteht, dass das Verstellteil 21 durch einen Nutzer händisch betätigt werden kann. Das Verschlusselement 211 kann somit relativ zu dem Gehäuse 20 und damit relativ zu der Strömungsöffnung 201 bewegt werden, um die Strömungsöffnung 201 zu öffnen und einen Luftstrom in einen Raum zwischen dem Unterdruckelement 22 und der Baugruppe 6 zu ermöglichen.

Zum Verbinden des Verschlussmoduls 2 mit der Baugruppe 6 können das Verschlussmodul 2 und die Baugruppe 6 aneinander angesetzt werden, sodass das Unterdruckelement 22 mit einem Flächenabschnitt der Baugruppe 6 in flächige Anlage gelangt und dabei elastisch verformt wird. In einer verbundenen Stellung ist die Strömungsöffnung 201 durch das Verschlusselement 211 verschlossen, wobei das Verstellteil 21 beispielsweise in Richtung dieser verschlossenen Stellung elastisch vorgespannt sein kann und somit das Unterdruckelement 22 unter Unterdruckwirkung mit der Baugruppe 6 zusammenwirkt.

Das Verschlussmodul 2 weist eine Magnetanordnung 24 zum Beispiel in Form einer Mehrzahl von durch Permanentmagneten ausgebildeten Magnetelementen auf, die magnetisch mit der Baugruppe 6, zum Beispiel einer Magnetanordnung der Baugruppe 6 zusammenwirkt. Beispielsweise kann die Baugruppe 6 eine weitere Magnetanordnung in Form von magnetisch anziehend mit der Magnetanordnung 24 des Verschlussmoduls 2 zusammenwirkenden Permanentmagneten oder in Form eines magnetischen Ankers aufweisen, sodass eine magnetische Anziehung zwischen dem Verschlussmodul 2 und der Baugruppe 6 besteht und das Ansetzen des Verschlussmoduls 2 und der Baugruppe 6 aneinander somit magnetisch unterstützt wird.

Hingewiesen sei an dieser Stelle darauf, dass das Verschlussmodul 2 auch nach einem anderen Wirkprinzip zur Verbindung mit der Baugruppe 6 ausgestaltet sein kann. Beispielsweise kann das Verschlussmodul 2 zum Herstellen einer rastenden Verbindung, einer magnetischen Verbindung und/oder einer Unterdruckverbindung mit der Baugruppe 6 ausgestaltet sein.

Das Verschlussmodul 2 ist über ein Verbindungselement 4 mit einem der Baugruppe 5 zugeordneten Koppelteil 3 in Form einer Kappe zu verbinden. Hierzu weist das Verschlussmodul 2 einen Koppelabschnitt 23 auf, der eine Auflagefläche 231 ausbildet, die flächig mit einer Auflagefläche 301 des Koppelteils 3 in Anlage gebracht werden kann. Das Verbindungselement 4 kann hierbei derart mit dem Koppelabschnitt 23 und einem Koppelabschnitt 30 des Koppelteils 3 in Eingriff gebracht werden, dass eine formschlüssige und/oder kraftschlüssige Verbindung zwischen dem Verbindungselement 4 und dem Koppelabschnitt 23 des Verschlussmoduls 2 einerseits und dem Koppelabschnitt 30 des Koppelteils 3 andererseits hergestellt wird.

Bei dem dargestellten Ausführungsbeispiel weist das Verbindungselement 4 eine ringförmige Gestalt auf, mit einem Körper 40, der sich um eine Ansetzrichtung A, entlang derer das Verschlussmodul 2 und das Koppelteil 3 aneinander angesetzt werden können, erstreckt und über eine Spanneinrichtung 41 gespannt werden kann.

Innenseitig des Körpers 40 sind umfänglich um die Ansetzrichtung A erstreckte Eingriffsabschnitte 400, 401 geformt, die zum Verspannen des Verschlussmoduls 2 und des Koppelteils 3 miteinander mit dem Koppelabschnitt 23 des Verschlussmoduls 2 und dem Koppelabschnitt 30 des Koppelteils 3 quer zur Ansetzrichtung A, nämlich in eine radial nach innen gerichtete Eingriffsrichtung E, in Eingriff gebracht werden können, wie dies aus der Schnittansicht gemäß Fig. 2B ersichtlich ist.

Der Koppelabschnitt 23 des Verschlussmoduls 2 einerseits und der Koppelabschnitt 30 des Koppelteils 3 andererseits bilden jeweils eine umfänglich um die Ansetzrichtung A erstreckte Spannfläche 230, 300 aus, die eine Kegelstumpfform ausbildet und derart zur Ansetzrichtung A geneigt ist, dass sich der Koppelabschnitt 23 und der Koppelabschnitt 30 ausgehend von der jeweils zugeordneten Auflagefläche 231, 301 in eine von dem jeweils anderen Bauteil abgewandte Richtung verjüngen.

Mit diesen Spannflächen 230, 300 kann das Verbindungselement 4 über die innenseitig des Körpers 40 geformten Eingriffsabschnitte 400, 401, die komplementär zu den kegelstumpfförmigen Spannflächen 230, 300 geformt sind, in Eingriff gebracht werden, sodass darüber das Verschlussmodul 2 und das Koppelteil 3 miteinander verspannt und axial entlang der Ansetzrichtung A aneinander gehalten werden.

Die Auflageflächen 231, 301 können axial federnd ausgebildet sein, sodass die Auflageflächen 231, 301 elastisch entlang der Ansetzrichtung A verstellt werden können. Die Auflageflächen 231, 301 können hierzu aus einem elastischen Material geformt sein. Alternativ können die Auflageflächen 231, 301 zum Beispiel jeweils durch ein Flächenelement geformt und axial gegenüber dem Koppelelement 23 des Verschlussmoduls 2 bzw. dem Koppelabschnitt 30 des Koppelteils 3 über ein elastisches Element, zum Beispiel ein Federelement, abgestützt sein.

Über das Verbindungselement 4 wird eine formschlüssige Verbindung zwischen dem Verschlussmodul 2 und dem Koppelteil 3 hergestellt, indem das Verbindungselement 4 mit den Eingriffsabschnitten 400, 401 die Spannflächen 230, 300 umgreift und darüber das Verschlussmodul 2 und das Koppelteil 3 aneinander hält.

Aufgrund der Kegelstumpfform der Spannflächen 230, 300 und der dazu komplementären Form der Eingriffsabschnitte 400, 401 erfolgt eine axiale Spannwirkung zwischen dem Verschlussmodul 2 und dem Koppelteil 3 derart, dass die Auflageflächen 231, 301 entlang der Ansetzrichtung A axial aufeinander zu belastet und somit gegeneinander gedrückt werden. Es ergibt sich eine spielfreie Anlage und ein fester, belastbarer Halt zwischen dem Verschlussmodul 2 und dem Koppelteil 3.

Bei dem dargestellten Ausführungsbeispiel kann der Körper 40 des Verbindungselements 4 über die Spanneinrichtung 41 gespannt werden, indem der Körper 40 in seiner radialen Weite verkleinert und dadurch spannend mit den Spannflächen 230, 300 des Koppelabschnitts 23 und des Koppelabschnitts 30 in Anlage gebracht wird.

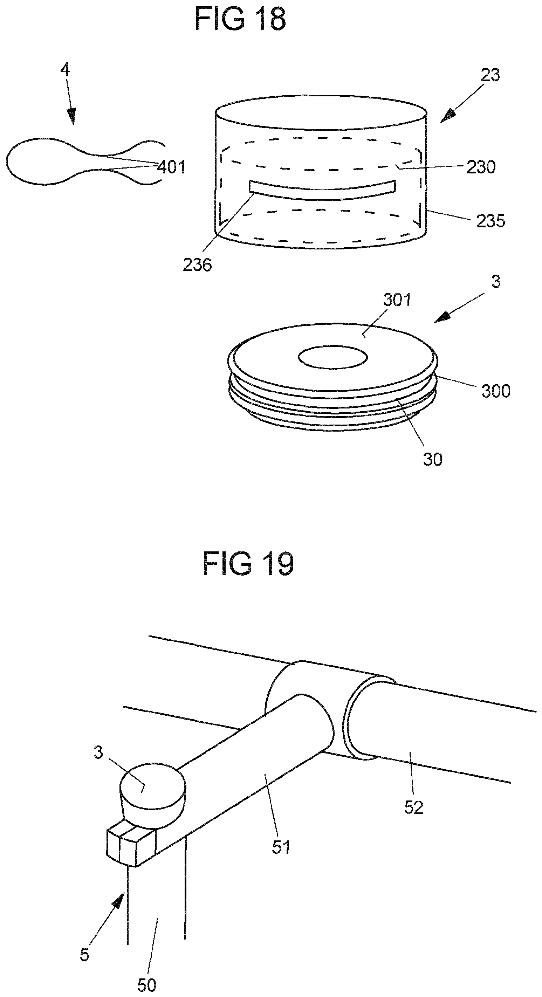

Das Koppelteil 3 kann beispielsweise eine sogenannte Ahead-Kappe eines Fahrzeugs in Form eines Fahrrads verwirklichen, wie dies schematisch in Fig. 19 dargestellt ist. Eine solche Ahead-Kappe kann an einem oberen Ende einer Vorderradgabel 50 des Fahrrads angebracht werden und dient zur axialen Fixierung eines Vorderbaus 51 zur Verbindung der Vorderradgabel 50 mit einer Lenkerstange 52.

Eine solche Ahead-Kappe ist in ihrer Funktionsweise beispielsweise in der US 5,095,770 und der US 8,662,517 beschrieben.

Über das Verbindungselement 4 kann das Verschlussmodul 2 somit mit dem Koppelteil 3 und darüber mit der Baugruppe 5 verbunden werden. Das Verbindungselement 4 ermöglicht eine einfach herzustellende, aber dennoch zuverlässige und belastbare Verbindung zwischen dem Verschlussmodul 3 und dem Koppelteil 3. Durch Lösen des Verbindungselements 4 kann das Verschlussmodul 2 dabei auch wieder entfernt und gegebenenfalls ausgetauscht werden, sodass auf diese Weise eine variable Verwendung eines Verschlussmoduls 2 an einem Koppelteil 3 möglich ist.

Wie dies aus Fig. 1 und 2A, 2B ersichtlich ist, kann an dem Koppelteil 3 ein Befestigungselement 31 zum Beispiel in Form einer Schraube angeordnet sein, das mit einem Kopf in einer Befestigungsöffnung im Bereich der Auflagefläche 301 einliegt und über das das Koppelteil 3 mit der zugeordneten Baugruppe 5, beispielsweise der Vorderradgabel 50 eines Fahrzeugs, verbunden werden kann.

Das Verbindungselement 4 kann ganz unterschiedlich ausgestaltet sein.

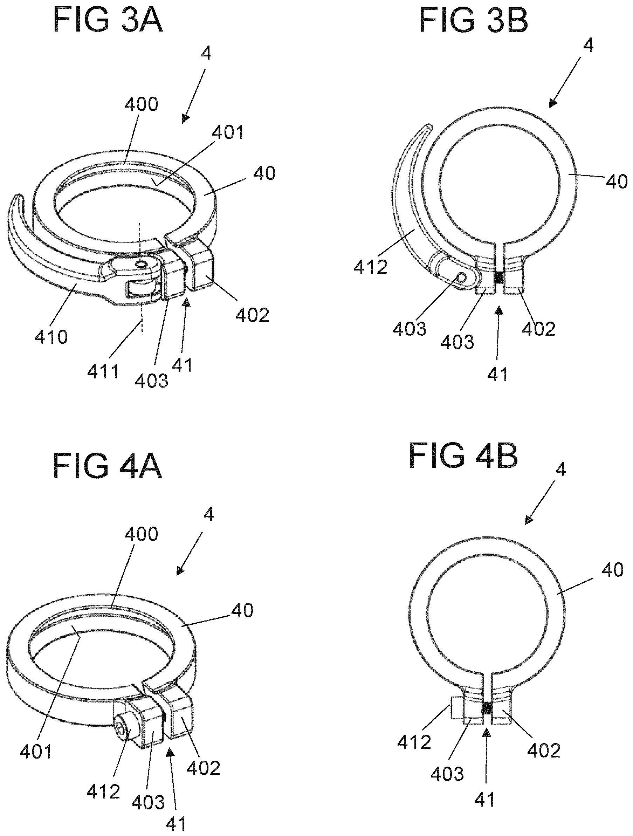

So ist bei einem in Fig. 3A, 3B dargestellten Ausführungsbeispiel die Spanneinrichtung 41 mit einem exzentrisch wirkenden Spannhebel 410 ausgestaltet, der dazu ausgestaltet ist, Enden 402, 403 des Körpers 40 miteinander zu verspannen, um auf diese Weise eine Spannwirkung an dem Körper 40 des Verbindungelements 4 zu bewirken.

Bei einem in Fig. 4A, 4B dargestellten Ausführungsbeispiel weist die Spanneinrichtung 41 des Verbindungelements 4 demgegenüber ein Spannelement 412 in Form einer Schraube auf, über die Enden 402, 403 des Körpers 40 miteinander verspannt werden können.

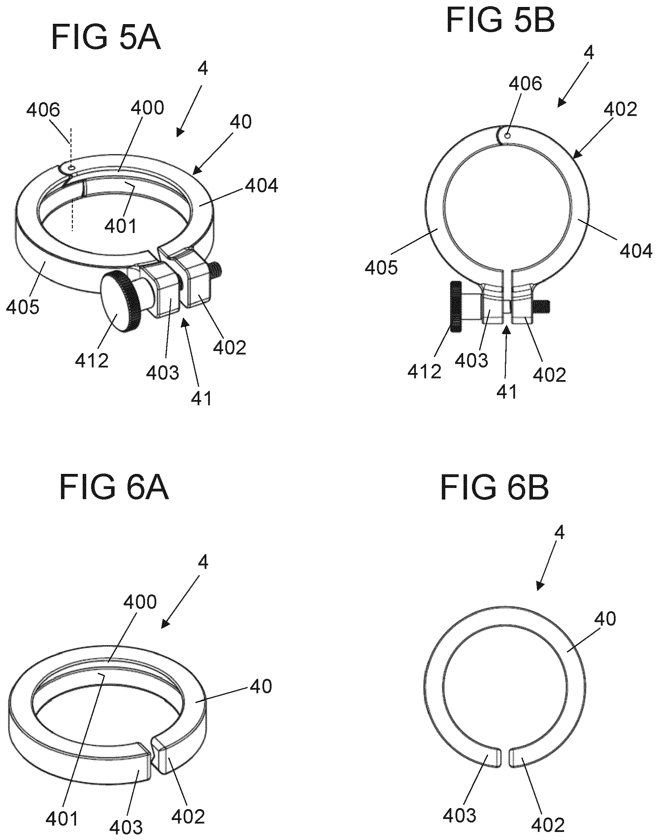

Fig. 5A, 5B zeigen Ansichten eines Ausführungsbeispiels eines Verbindungelements 4, bei dem der Körper 40 durch Segmente 404, 405 gebildet ist, die um eine Gelenkachse 406 gelenkig miteinander verbunden sind. Die Spanneinrichtung 41 weist in diesem Fall ein Spannelement 412 in Form einer Schraube auf, die händisch durch einen Nutzer verdreht werden kann. Wiederum können über das Spannelement 412 Enden 402, 403 des Körpers 40 zueinander verspannt werden.

Bei einem in Fig. 6A, 6B dargestellten Ausführungsbeispiel weist das Verbindungselement 4 einen ringförmigen Körper 40 auf, jedoch keine Spanneinrichtung. Enden 402, 403 des Körpers 40 sind einander zugewandt, jedoch frei voneinander. Über das Verbindungselement 4 kann aufgrund einer Eigenelastizität in dem Körper 40 das Verschlussmodul 2 mit dem Koppelteil 3 verspannt werden, indem der Körper 40 mit seinen darin geformten Eingriffsabschnitten 400, 401 mit den Spannflächen 230, 300 in Eingriff gebracht wird.

Eine Verbindung kann jedoch auch ohne Verspannen erfolgen, indem der Körper 40 den Koppelabschnitt 23 einerseits und den Koppelabschnitt 30 andererseits umgreift und formschlüssig ohne nennenswerte Spannwirkung miteinander verbindet.

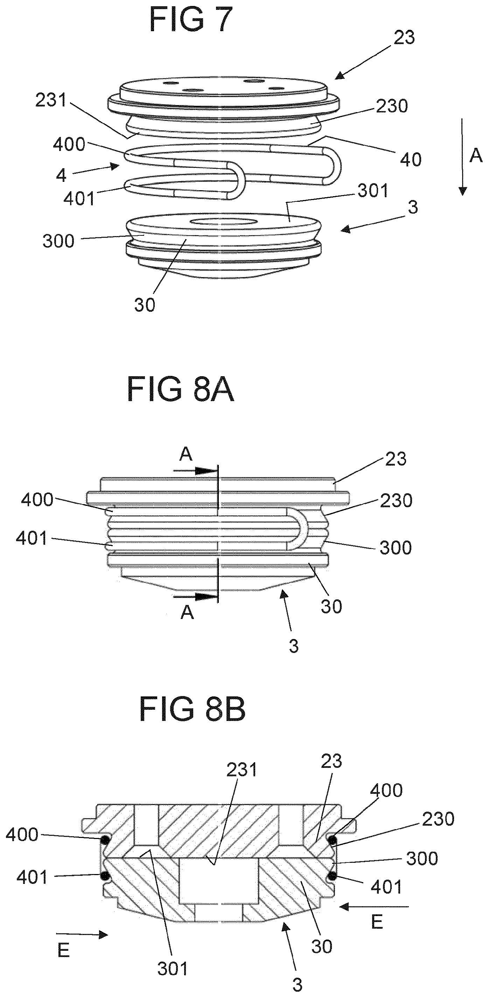

In Fig. 7 und 8A, 8B ist ein wiederum anderes Ausführungsbeispiel eines Verbindungelements 4 dargestellt, bei dem das Verbindungselement 4 durch ein Bügelelement in Form eines Drahtbügels geformt ist. Der Drahtbügel bildet Eingriffsabschnitte 400, 401 in Form von Drahtstreben aus, die mit den Spannflächen 230, 300 an dem Koppelabschnitt 23 des Verschlussmoduls 2 einerseits und dem Koppelabschnitt 30 des Koppelteils 3 andererseits verspannend in Eingriff gebracht werden können, wie dies aus Fig. 7 in Zusammenschau mit Fig. 8A und 8B ersichtlich ist.

Wiederum wird an den Spannflächen 230, 300 aufgrund der Kegelstumpfform eine Kraftumlenkung derart bewirkt, dass der Koppelabschnitt 23 und der Koppelabschnitt 30 aufgrund der Spannwirkung des Verbindungelements 4 entlang der Ansetzrichtung A gegeneinander belastet und somit mit den Auflageflächen 231, 301 aneinander gedrückt werden.

Das Verbindungselement 4 in Form des Bügelelements weist bei dem Ausführungsbeispiel gemäß Fig. 7 und 8A, 8B eine U-Form oder C-Form auf und umgreift die Spannfläche 230, 300 umfänglich um die Ansetzrichtung A um einen Winkel größer als 180°, sodass eine Spannwirkung zumindest an zwei einander diametral gegenüberliegenden Seiten der Spannflächen 230, 300 bewirkt wird und das Verschlussmodul 2 und das Koppelteil 3 darüber miteinander verspannt werden.

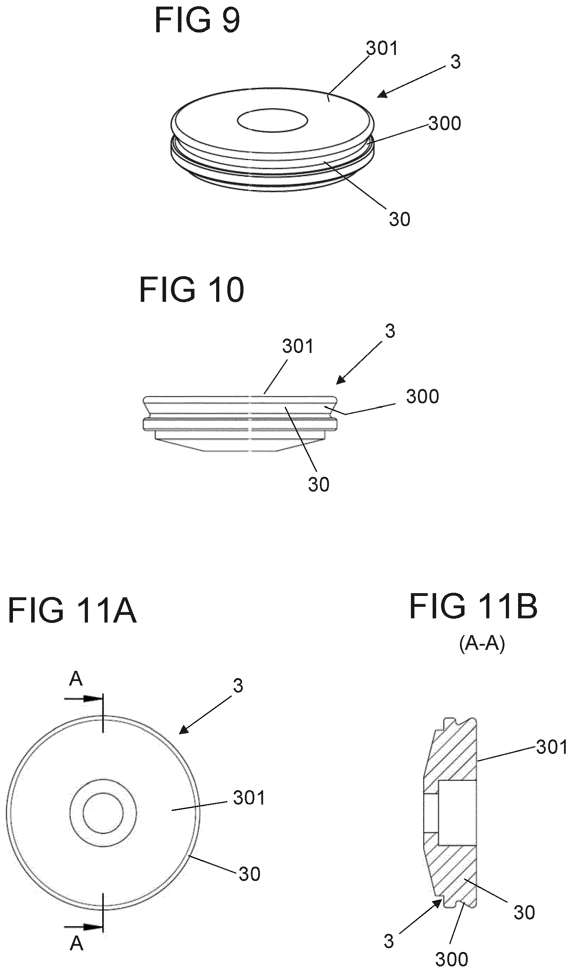

Fig. 9, 10 und 11A, 11B zeigen Ansichten des Koppelteils 3, beispielsweise in Form einer Ahead-Kappe. Das Koppelteil 3 weist bei dem dargestellten Ausführungsbeispiel eine im wesentlichen rotationssymmetrische Form mit einer kegelstumpfförmigen Spannfläche 300 und einer entlang der Ansetzrichtung A mit dem Koppelabschnitt 23 des Verschlussmoduls 2 in Anlage bringbaren Auflagefläche 301 auf.

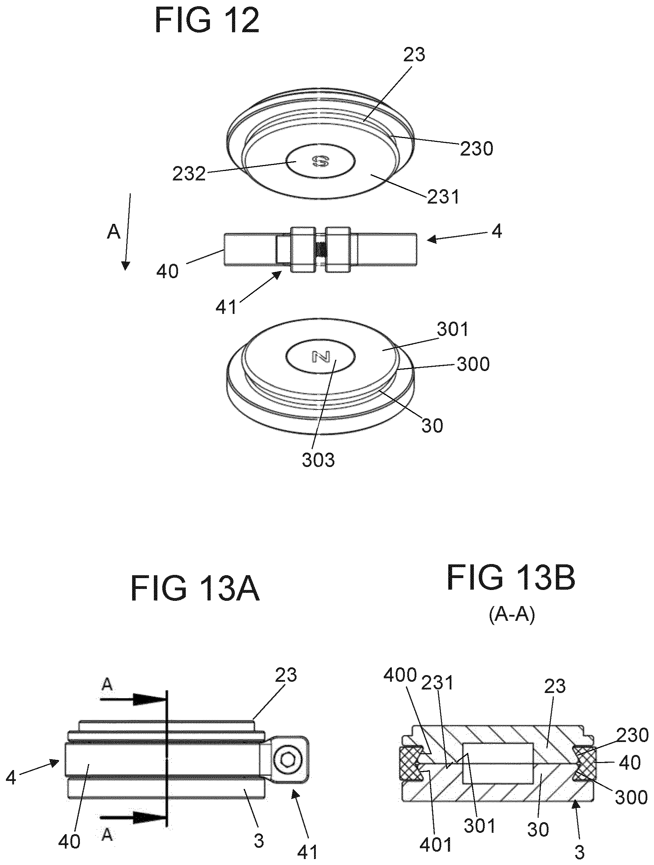

Bei einem in Fig. 12, 13A, 13B dargestellten Ausführungsbeispiel sind an dem Koppelabschnitt 23 des Verschlussmoduls 2 einerseits und dem Koppelabschnitt 30 des Koppelteils 3 andererseits jeweils ein Magnetelement 232, 303 angeordnet, die mit ungleichnamigen Polen N, S aufeinander zu weisen und somit magnetisch anziehend zusammenwirken. Das Ansetzen des Verschlussmoduls 2 und des Koppelteils 3 erfolgt somit magnetisch unterstützt durch die Magnetelemente 232, 303, sodass das Ansetzen des Verschlussmoduls 2 und des Koppelteils 3 aneinander vereinfacht ist.

Mit Blick auf die sonstige Ausgestaltung des Koppelabschnitts 23, des Koppelteils 3 und des Verbindungelements 4 ist das dargestellte Ausführungsbeispiel ansonsten identisch dem Ausführungsbeispiel gemäß Fig. 1 und 2A, 2B, sodass auf die vorangehenden Ausführungen verwiesen werden soll.

Bei den vorangehend beschriebenen Ausführungsbeispielen können das Verschlussmodul 2 und das Koppelteil 3 gegebenenfalls, aufgrund der rotationssymmetrischen Ausgestaltung des Koppelabschnitts 23 und des Koppelabschnitts 30, in einer aneinander angesetzten Stellung um die Ansetzrichtung A zueinander verdreht werden, sodass das Verschlussmodul 2 und das Koppelteil 3 in unterschiedlichen Drehstellungen miteinander in Verbindung gebracht und gegebenenfalls auch nach Herstellung der Verbindung über das Verbindungselement 4 noch in ihrer Lage zueinander angepasst werden können.

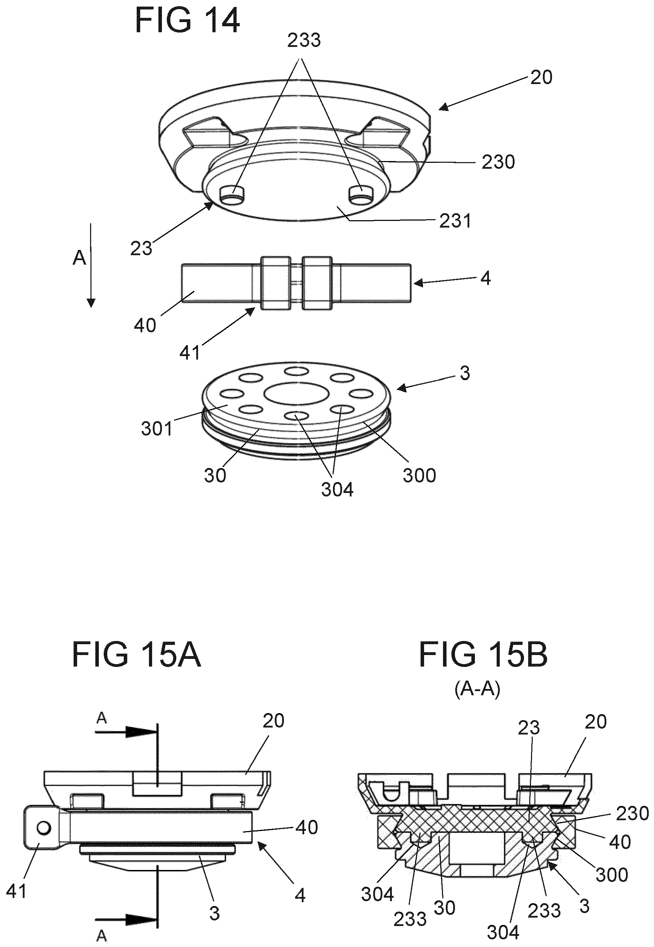

Bei einem in Fig. 14, 15A, 15B dargestellten nicht patentgemäßen Beispiel sind an der Auflagefläche 231 des Koppelabschnitts 23 des Verschlussmoduls 2 demgegenüber Formschlusselemente 233 in Form von Zapfen geformt, die zum Eingriff in Formschlusselemente 304 in Form von Eingriffsöffnungen an der Auflagefläche 301 des Koppelabschnitts 30 des Koppelteils 3 ausgebildet sind. Die Formschlusselemente 233 in Form der Zapfen sind diametral zur Ansetzrichtung A an der Auflagefläche 231 des Koppelabschnitts 23 zueinander versetzt. Während der Koppelabschnitt 23 dabei ein Paar von zwei Formschlusselementen 233 aufweist, sind an der Auflagefläche 301 des Koppelabschnitts 30 des Koppelteils 3 ein ganzzahliges Vielfaches von Paaren von Formschlusselementen 304 in Form von Eingriffsöffnungen geformt, sodass das Verschlussmodul 2 in diskreten, um die Ansetzrichtung A zueinander winkelversetzten Drehstellungen unter Eingriff der Formschlusselemente 233, 304 miteinander an das Koppelteil 3 angesetzt werden kann. In einer aneinander angesetzten Stellung sind das Verschlussmodul 2 und das Koppelteil 3 dann drehfest zueinander festgelegt.

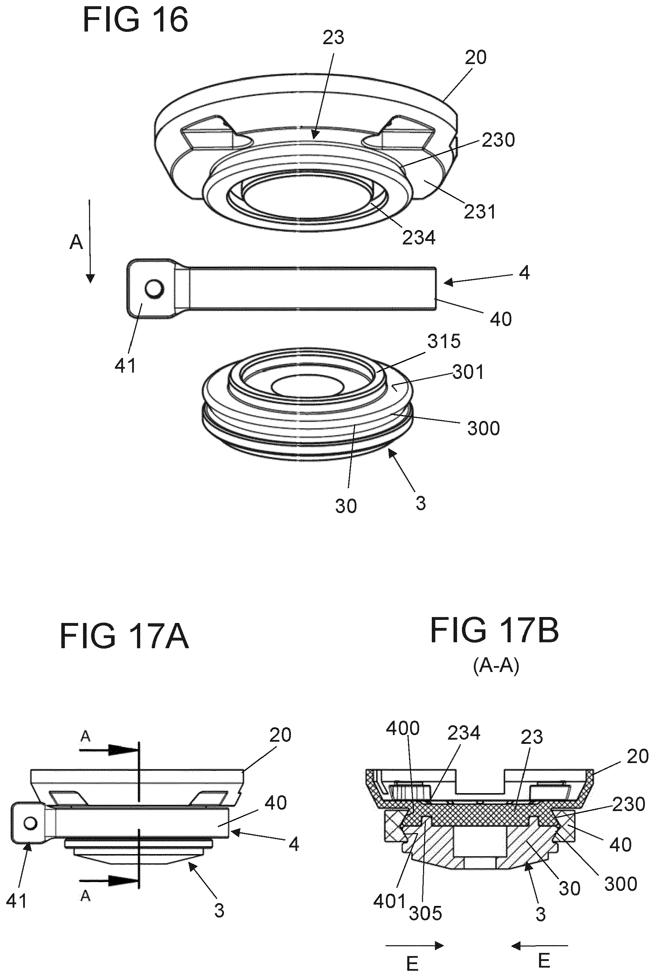

Bei einem in Fig. 16, 17A, 17B dargestellten Ausführungsbeispiel ist an der Auflagefläche 231 des Koppelabschnitts 23 eine Zentriereinrichtung 234 in Form einer umfänglich um die Ansetzrichtung A erstreckten, ringförmigen Nut geformt, die mit einer Zentriereinrichtung 305 in Form eines ringförmigen Stegs an der Auflagefläche 301 in einen zentrierenden Eingriff gebracht werden kann. Weil die Zentriereinrichtungen 234, 305 rotationssymmetrisch ausgebildet sind, können das Verschlussmodul 2 und das Koppelteil 3 auch in einer aneinander angesetzten Stellung und gegebenenfalls auch nach Herstellung der Verbindung über das Verbindungselement 4 noch in ihrer rotatorischen Lage zueinander angepasst und zueinander verdreht werden, wobei der Koppelabschnitt 23 des Verschlussmoduls 2 und der Koppelabschnitt 30 des Koppelteils 3 über die Zentriereinrichtungen 234, 305 zueinander zentriert sind.

Bei den vorangehend beschriebenen Ausführungsbeispielen ist das Verbindungselement 4 dazu ausgestaltet, sowohl mit dem Koppelabschnitt 23 des Verschlussmoduls 2 als auch mit dem Koppelabschnitt 30 des Koppelteils 3 in Eingriff zu treten, um eine formschlüssige und/oder kraftschlüssige Verbindung zwischen dem Verschlussmodul 2 und dem Koppelteil 3 herzustellen. Eingriffsabschnitte 400, 401 des Verbindungselements 4 greifen hierbei an Spannflächen 230, 300 des Koppelabschnitts 23 des Verschlussmoduls 2 und des Koppelabschnitts 30 des Koppelteils 3 an, um auf diese Weise das Verschlussmodul 2 und das Koppelteil 3 axial entlang der Ansetzrichtung A zueinander zu verspannen.

Während bei den vorangehend beschriebenen Ausführungsbeispielen das Verbindungelement 4 um axial zueinander versetzte Spannflächen 230, 300 des Verschlussmoduls 2 und des Koppelteils 3 herum greift, wirkt bei einem in Fig. 18 schematisch dargestellten Ausführungsbeispiel ein Verbindungselement 4 beispielsweise in Form eines Drahtbügels lediglich mit einer Spannfläche 300 an einem Koppelteil 3 zusammen.

Bei dem dargestellten Ausführungsbeispiel kann das Koppelteil 3 in eine hohlzylindrische Verbindungshülse 235 an einem Koppelabschnitt 23 des Verschlussmoduls 2 eingesetzt werden, um eine Auflagefläche 231 innerhalb der Verbindungshülse 235 mit einer Auflagefläche 301 am Koppelabschnitt 30 des Koppelteils 3 in Anlage zu bringen. Ist das Koppelteil 3 in die Verbindungshülse 235 eingesetzt worden, kann das Verbindungselement 4 derart an die Verbindungshülse 235 angesetzt werden, dass das Verbindungselement 4 mit radial nach innen weisenden Eingriffsabschnitten 401 durch diametral gegenüberliegende Schlitzöffnungen 236 an der Verbindungshülse 235 hindurchgreift und mit der Spannfläche 300 des Koppelteils 3 in Eingriff gelangt, sodass darüber das Koppelteil 3 an dem Koppelabschnitt 23 fixiert ist.

Bei diesem Ausführungsbeispiel wirkt das Verbindungselement 4 somit spannend lediglich auf das Koppelteil 3 ein, wobei zusätzlich ein Formschluss mit der Verbindungshülse 235 hergestellt und darüber das Koppelteil 3 an dem Koppelabschnitt 23 fixiert ist.

Der der Erfindung zugrunde liegende Gedanke ist nicht auf die vorangehend geschilderten Ausführungsbeispiele beschränkt, sondern lässt sich auch in anderer Weise verwirklichen.

Das Verschlussmodul und das Koppelteil können magnetisch zusammenwirken, indem das Verschlussmodul und das Koppelteil jeweils eine Magnetanordnung aufweisen. Dies ist jedoch nicht zwingend. Eine Verbindung zwischen einem Verschlussmodul und einem Koppelteil kann auch ohne magnetische Wechselwirkung zwischen dem Verschlussmodul und dem Koppelteil hergestellt werden.

Das Verbindungselement kann spannend zwischen dem Verschlussmodul und dem Koppelteil wirken, wobei auch dies nicht zwingend ist. So kann das Verbindungselement auch lediglich einen Formschluss zum Sichern einer Verbindung herstellen, ohne eine Spannwirkung zwischen dem Verschlussmodul und dem Koppelteil in axialer Richtung zu bewirken.

Der Koppelabschnitt des Verschlussmoduls und der Koppelabschnitt des Koppelteils können rotationssymmetrisch ausgestaltet sein, mit rotationssymmetrischen, umfänglich um die Ansetzrichtung erstreckten Spannflächen. Dies ist jedoch nicht zwingend. So können der Koppelabschnitt und der Koppelabschnitt insbesondere im Bereich von Spannflächen auch nicht rotationssymmetrisch geformt sein, beispielsweise eckig oder oval oder in unregelmäßig geformter Weise.

Eine Verbindungsvorrichtung der beschriebenen Art kann zur Verbindung einer Baugruppe, zum Beispiel einer elektronischen Baugruppe wie einem Mobiltelefon oder einem Navigationsgerät, mit einem Fahrzeug, zum Beispiel einem Fahrrad, dienen. Dies ist jedoch nicht beschränkend. Grundsätzlich kann die Verbindungsvorrichtung zum Verbinden ganz beliebiger Baugruppen miteinander Verwendung finden.

### Bezugszeichenliste

- 1: Verbindungsvorrichtung
- 2: Verschlussmodul
- 20: Gehäuse
- 200: Boden
- 201: Strömungsöffnung
- 202: Formschlusselement
- 21: Verstellteil
- 210: Lagerende
- 211: Verschlusselement
- 22: Unterdruckelement
- 23: Koppelabschnitt
- 230: Spannfläche
- 231: Auflagefläche
- 232: Magnetelement
- 233: Formschlusselement
- 234: Zentriereinrichtung
- 235: Verbindungshülse
- 236: Schlitzöffnung
- 24: Magnetelement
- 3: Koppelteil (Ahead-Kappe)
- 30: Koppelabschnitt
- 300: Spannfläche
- 301: Auflagefläche
- 303: Magnetelement
- 304: Formschlusselement (Eingriffsöffnung)
- 305: Zentriereinrichtung
- 31: Befestigungselement (Schraube)
- 32: Koppelabschnitt
- 4: Verbindungselement
- 40: Umgriffsabschnitt
- 400, 401: Eingriffsabschnitt
- 402, 403: Ende
- 404, 405: Segment
- 406: Gelenkachse
- 41: Spanneinrichtung
- 410: Spannhebel
- 411: Schwenkachse
- 412: Spannelement (Schraube)
- 41: Spanneinrichtung
- 5: Baugruppe (Fahrrad)
- 50: Vorderradgabel
- 51: Vorderbau
- 52: Fahrradlenker
- 6: Baugruppe (elektronisches Gerät, insbesondere Mobiltelefon)
- A: Ansetzrichtung
- E: Eingriffsrichtung

## Patentansprüche

1. Verbindungsvorrichtung (1) zum lösbaren Verbinden zweier Baugruppen (5, 6), mit
einem Verschlussmodul (2), das einer ersten der Baugruppen (5, 6) zugeordnet und mit einer zweiten der Baugruppen (5, 6) zur Herstellung einer Verbindung zwischen den Baugruppen (5, 6) lösbar verbindbar ist,
einem mit der ersten der Baugruppen (5, 6) verbindbares Koppelteil (3) und
einem Verbindungselement (4), das zumindest einen Eingriffsabschnitt (400, 401) aufweist, der ausgebildet ist, zum Verbinden des Koppelteils (3) mit dem Verschlussmodul (2) in eine Eingriffsrichtung (E) quer zu einer Ansetzrichtung (A) formschlüssig und/oder kraftschlüssig mit zumindest einem von dem Verschlussmodul (2) und dem Koppelteil (3) zusammenzuwirken,
wobei das Verschlussmodul (2) eine erste Auflagefläche (231) und das Koppelteil (3) eine entlang der Ansetzrichtung (A) an die erste Auflagefläche (231) ansetzbare, zweite Auflagefläche (301) aufweisen,
wobei die erste Auflagefläche (231) und die zweite Auflagefläche (301) in einer aneinander angesetzten Stellung um die Ansetzrichtung (A) zueinander drehbar sind,
**dadurch gekennzeichnet, dass** das Koppelteil (3) durch eine Ahead-Kappe zur Anordnung an einem Fahrrad ausgebildet ist.

2. Verbindungsvorrichtung (1) nach Anspruch 1, **dadurch gekennzeichnet, dass** das Verbindungselement (4) in gekoppelter Stellung zumindest eines von dem Verschlussmodul (2) und dem Koppelteil (3) um die Ansetzrichtung (A) umgreift.

3. Verbindungsvorrichtung (1) nach Anspruch 1 oder 2, **dadurch gekennzeichnet, dass** zumindest eines von dem Verschlussmodul (2) und dem Koppelteil (3) einen Koppelabschnitt (23, 32) aufweist, wobei das Verbindungselement (4) ausgebildet ist, mit dem Koppelabschnitt (23, 32) zum Verbinden des Koppelteils (3) mit dem Verschlussmodul (2) formschlüssig und/oder kraftschlüssig zusammenzuwirken.

4. Verbindungsvorrichtung (1) nach Anspruch 3, **dadurch gekennzeichnet, dass** der Koppelabschnitt (23, 32) eine Spannfläche (230, 300) zum Wechselwirken mit dem Verbindungselement (4) aufweist.

5. Verbindungsvorrichtung (1) nach Anspruch 4, **dadurch gekennzeichnet, dass** die Spannfläche (230, 300) schräg zur Ansetzrichtung (A) geneigt ist, insbesondere wobei die Spannfläche (230, 300) derart zur Ansetzrichtung (A) geneigt ist, dass das Verbindungselement (4) über den zumindest einen Eingriffsabschnitt (400, 401) eine Kraft an der Spannfläche (230, 300) zum Belasten des Verschlussmoduls (2) und des Koppelteils (3) aufeinander zu ausübt.

6. Verbindungsvorrichtung (1) nach einem der Ansprüche 4 bis 6, **dadurch gekennzeichnet, dass** die Spannfläche (230, 300) umfänglich um die Ansetzrichtung (A) erstreckt ist.

7. Verbindungsvorrichtung (1) nach einem der Ansprüche 1 bis 6, **dadurch gekennzeichnet, dass** das Verbindungselement (4) durch ein umfänglich geöffnetes Bügelelement ausgebildet ist, wobei das Bügelelement insbesondere durch einen Drahtbügel mit zumindest einer um die Ansetzrichtung (A) erstreckten Strebe (407, 408) ausgebildet ist.

8. Verbindungsvorrichtung (1) nach einem der Ansprüche 1 bis 6, **dadurch gekennzeichnet, dass** das Verbindungselement (4) durch ein umfänglich geschlossenes oder umfänglich geöffnetes Ringelement ausgebildet ist, das zumindest eines von dem Verschlussmodul (2) und dem Koppelteil (3) ringförmig umgibt, wobei das Ringelement insbesondere zumindest zwei gelenkig miteinander verbundene Segmente (404, 405) aufweist.

9. Verbindungsvorrichtung (1) nach einem der vorangehenden Ansprüche, **dadurch gekennzeichnet, dass** das Verbindungselement (4) einen zumindest abschnittsweise umfänglich um die Ansetzrichtung (A) erstreckten, den zumindest einen Eingriffsabschnitt (401, 401) ausbildenden Körper (40) und eine mit Enden (402, 403) des Körpers (40) wirkverbundene Spanneinrichtung (41) zum Spannen des Körpers (40) aufweist, wobei die Spanneinrichtung (41) insbesondere durch eine Schraube (412) oder einen Spannhebel (410) spannbar ist.

10. Verbindungsvorrichtung (1) nach einem der vorangehenden Ansprüche, **dadurch gekennzeichnet, dass** an der ersten Auflagefläche (231) zumindest eine erste Zentriereinrichtung (234) und an der zweiten Auflagefläche (301) zumindest eine zweite Zentriereinrichtung (305) angeordnet sind, die in einer aneinander angesetzten Stellung formschlüssig miteinander in Eingriff stehen und die erste Auflagefläche (231) und die zweite Auflagefläche (301) relativ zur Ansetzrichtung (A) zueinander zentrieren.

11. Verbindungsvorrichtung (1) nach einem der vorangehenden Ansprüche, **dadurch gekennzeichnet, dass** zumindest eine der ersten Auflagefläche (231) und der zweiten Auflagefläche (301) axial entlang der Ansetzrichtung (A) elastisch federnd ausgestaltet ist.

12. Verbindungsvorrichtung (1) nach einem der vorangehenden Ansprüche, **dadurch gekennzeichnet, dass** das Verschlussmodul (2) ein erstes Magnetelement (232) und das Koppelteil (3) ein zweites Magnetelement (303) aufweisen, wobei das erste Magnetelement (232) und das zweite Magnetelement (303) bei Ansetzen des Verschlussmoduls (2) und des Koppelteils (3) aneinander magnetisch anziehend zusammenwirken.

13. Verbindungsvorrichtung (1) nach einem der vorangehenden Ansprüche, **dadurch gekennzeichnet, dass** das Verschlussmodul (2) ein Unterdruckelement (27) aufweist, das an die zweite der Baugruppen (5, 6) zur Herstellung einer Verbindung zwischen den Baugruppen (5, 6) ansetzbar und ausgebildet ist, in einer verbundenen Stellung durch Unterdruckwirkung eine Haltekraft zwischen den Baugruppen (5, 6) bereitzustellen, wobei das Unterdruckelement (27) insbesondere durch ein zumindest abschnittsweise elastisches Napfelement ausgebildet ist.

14. Verbindungsvorrichtung (1) nach Anspruch 13, **dadurch gekennzeichnet, dass** das Verschlussmodul (2) ein Gehäuse (20) und eine in dem Gehäuse (20) geformte Strömungsöffnung (201) zum Freigeben eines Strömungswegs in einen Raum zwischen der zweiten der Baugruppen (5, 6) und dem Unterdruckelement (22) aufweist, wobei die Strömungsöffnung (201) insbesondere in einem von dem Unterdruckelement (22) eingefassten Boden (200) des Gehäuses (20) gebildet ist.

## Claims

1. A connecting device (1) for detachably connecting two assemblies (5, 6), comprising
a closure module (2), which is associated to a first one of the assemblies (5, 6) and can be detachably connected to a second one of the assemblies (5, 6) for producing a connection between the assemblies (5, 6),
a coupling part (3) connectable to the first one of the assemblies (5, 6), and
a connecting element (4), which includes at least one engagement portion (400, 401) which is configured to connect the coupling part (3) to the closure module (2) in an engagement direction (E) transverse to an attachment direction (A), in a form-fitting and/or force-fitting manner, to interact with at least one of the closure module (2) and the coupling part (3)
wherein the closure module (2) has a first bearing surface (231) and the coupling part (3) has a second bearing surface (301) attachable to the first bearing surface (231) along the attachment direction (A),
wherein in a position attached to each other the first bearing surface (231) and the second bearing surface (301) are rotatable relative to each other around the attachment direction (A),
**characterized in that** the coupling part (3) is formed by an ahead cap for arrangement on a bicycle.

2. The connecting device (1) according to claim 1, **characterized in that** in the coupled position the connecting element (4) encloses at least one of the closure module (2) and the coupling part (3) around the attachment direction (A).

3. The connecting device (1) according to claim 1 or 2, **characterized in that** at least one of the closure module (2) and the coupling part (3) includes a coupling portion (23, 32), wherein the connecting element (4) is configured to positively and/or frictionally cooperate with the coupling portion (23, 32) for connecting the coupling part (3) to the closure module (2).

4. The connecting device (1) according to claim 3, **characterized in that** the coupling portion (23, 32) includes a clamping surface (230, 300) for interacting with the connecting element (4).

5. The connecting device (1) according to claim 4, **characterized in that** the clamping surface (230, 300) is inclined obliquely to the attachment direction (A), in particular wherein the clamping surface (230, 300) is inclined with respect to the attachment direction (A) in such a way that the connecting element (4) exerts a force on the clamping surface (230, 300) via the at least one engagement portion (400, 401) for loading the closure module (2) and the coupling part (3) towards each other.

6. The connecting device (1) according to any of claims 4 to 6, **characterized in that** the clamping surface (230, 300) circumferentially extends around the attachment direction (A).

7. The connecting device (1) according to any of claims 1 to 6, **characterized in that** the connecting element (4) is formed by a circumferentially open strap element, wherein the strap element in particular is formed by a wire strap with at least one strut (407, 408) extending around the attachment direction (A).

8. The connecting device (1) according to any of claims 1 to 6, **characterized in that** the connecting element (4) is formed by a circumferentially closed or circumferentially open ring element which annularly surrounds at least one of the closure module (2) and the coupling part (3), wherein the ring element in particular includes at least two segments (404, 405) hingedly connected to each other.

9. The connecting device (1) according to any of the preceding claims, **characterized in that** the connecting element (4) includes a body (40) at least sectionally circumferentially extending around the attachment direction (A), which forms the at least one engagement portion (400, 401), and a clamping device (41) operatively connected to ends (402, 403) of the body (40) for clamping the body (40), wherein the clamping device (41) in particular can be clamped by a screw (412) or a clamping lever (410).

10. The connecting device (1) according to any of the preceding claims, **characterized in that** on the first bearing surface (231) at least one first centering device (234) is arranged and on the second bearing surface (301) at least one second centering device (305) is arranged, which in a position attached to each other are positively in engagement with each other and center the first bearing surface (231) and the second bearing surface (301) with respect to each other relative to the attachment direction (A).

11. The connecting device (1) according to any of the preceding claims, **characterized in that** at least one of the first bearing surface (231) and the second bearing surface (301) is of elastically resilient design axially along the attachment direction (A).

12. The connecting device (1) according to any of the preceding claims, **characterized in that** the closure module (2) includes a first magnetic element (232) and the coupling part (3) includes a second magnetic element (303), wherein the first magnetic element (232) and the second magnetic element (303) cooperate in a magnetically attracting manner on attachment of the closure module (2) and the coupling part (3) to each other.

13. The connecting device (1) according to any of the preceding claims, **characterized in that** the closure module (2) includes a negative pressure element (27) which can be attached to the second one of the assemblies (5, 6) for producing a connection between the assemblies (5, 6) and is configured to provide a holding force between the assemblies (5, 6) in a connected position due to the effect of the negative pressure, wherein the negative pressure element (27) in particular is formed by an at least sectionally elastic cup element.

14. The connecting device (1) according to claim 13, **characterized in that** the closure module (2) includes a housing (20) and a flow opening (201) formed in the housing (20) for clearing a flow path in a space between the second one of the assemblies (5, 6) and the negative pressure element (22), wherein the flow opening (201) in particular is formed in a floor (200) of the housing (20) enclosed by the negative pressure element (22).

## Revendications

1. Dispositif de liaison (1) pour relier de manière amovible deux ensembles (5, 6), comprenant
un module de fermeture (2) qui est associé à un premier des ensembles (5, 6) et qui peut être relié de manière amovible à un deuxième des ensembles (5, 6) pour établir une liaison entre les ensembles (5, 6),
une partie de couplage (3) pouvant être reliée au premier des ensembles (5, 6) et
un élément de liaison (4) qui présente au moins une section d'engagement (400, 401) qui est conçue pour coopérer par complémentarité de forme et/ou par adhérence avec au moins l'un du module de fermeture (2) et de la partie de couplage (3) pour relier la partie de couplage (3) au module de fermeture (2) dans une direction d'engagement (E) transversalement à une direction d'application (A),
le module de fermeture (2) présentant une première surface d'appui (231) et la partie de couplage (3) présentant une deuxième surface d'appui (301) pouvant être appliquée contre la première surface d'appui (231) le long de la direction d'application (A),
dans lequel la première surface d'appui (231) et la deuxième surface d'appui (301) peuvent tourner l'une par rapport à l'autre autour de la direction d'application (A) dans une position appliquée l'une contre l'autre,
**caractérisé en ce que** la partie de couplage (3) est formée par un capuchon Ahead destiné à être disposé sur une bicyclette.

2. Dispositif de liaison (1) selon la revendication 1, **caractérisé en ce que** l'élément de liaison (4), en position couplée, entoure au moins l'un du module de fermeture (2) et de la partie de couplage (3) autour de la direction d'application (A).

3. Dispositif de liaison (1) selon la revendication 1 ou 2, **caractérisé en ce qu'**au moins l'un du module de fermeture (2) et de la partie de couplage (3) présente une section de couplage (23, 32), l'élément de liaison (4) étant conçu pour coopérer par complémentarité de forme et/ou par adhérence avec la section de couplage (23, 32) pour relier la partie de couplage (3) au module de fermeture (2).

4. Dispositif de liaison (1) selon la revendication 3, **caractérisé en ce que** la partie de couplage (23, 32) comprend une surface de serrage (230, 300) pour interagir avec l'élément de liaison (4).

5. Dispositif de liaison (1) selon la revendication 4, **caractérisé en ce que** la surface de serrage (230, 300) est inclinée obliquement par rapport à la direction d'application (A), en particulier dans lequel la surface de serrage (230, 300) est inclinée par rapport à la direction d'application (A) de telle sorte que l'élément de liaison (4) exerce une force sur la surface de serrage (230, 300) par l'intermédiaire de la au moins une section d'engagement (400, 401) pour charger le module de fermeture (2) et la partie de couplage (3) l'un vers l'autre.

6. Dispositif de liaison (1) selon l'une quelconque des revendications 4 à 6, **caractérisé en ce que** la surface de serrage (230, 300) s'étend circonférentiellement autour de la direction d'application (A).

7. Dispositif de liaison (1) selon l'une quelconque des revendications 1 à 6, **caractérisé en ce que** l'élément de liaison (4) est formé par un élément en forme d'étrier ouvert sur sa périphérie, l'élément en forme d'étrier étant notamment formé par un étrier en fil avec au moins une entretoise (407, 408) s'étendant autour de la direction d'application (A).

8. Dispositif de liaison (1) selon l'une quelconque des revendications 1 à 6, **caractérisé en ce que** l'élément de liaison (4) est formé par un élément annulaire fermé circonférentiellement ou ouvert circonférentiellement, qui entoure de manière annulaire au moins l'un du module de fermeture (2) et de la partie de couplage (3), l'élément annulaire présentant notamment au moins deux segments (404, 405) reliés entre eux de manière articulée.

9. Dispositif de liaison (1) selon l'une quelconque des revendications précédentes, **caractérisé en ce que** l'élément de liaison (4) comprend un élément de liaison (4) qui s'étend au moins par sections circonférentiellement autour de la direction d'application (A) et qui forme l'au moins une section d'engagement (401, (401) et un dispositif de serrage (41) en liaison active avec des extrémités (402, 403) du corps (40) pour le serrage du corps (40), le dispositif de serrage (41) pouvant être serré en particulier par une vis (412) ou un levier de serrage (410).

10. Dispositif de liaison (1) selon l'une quelconque des revendications précédentes, **caractérisé en ce qu'**au moins un premier dispositif de centrage (234) est disposé sur la première surface d'appui (231) et au moins un deuxième dispositif de centrage (305) est disposé sur la deuxième surface d'appui (301), lesquels sont en prise l'un avec l'autre par complémentarité de forme dans une position appliquée l'un contre l'autre et centrent la première surface d'appui (231) et la deuxième surface d'appui (301) l'une par rapport à l'autre dans la direction d'application (A).

11. Dispositif de liaison (1) selon l'une quelconque des revendications précédentes, **caractérisé en ce qu'**au moins l'une de la première surface d'appui (231) et de la deuxième surface d'appui (301) est réalisée de manière élastique axialement le long de la direction d'application (A).

12. Dispositif de liaison (1) selon l'une quelconque des revendications précédentes, **caractérisé en ce que** le module de fermeture (2) comprend un premier élément magnétique (232) et la partie de couplage (3) comprend un deuxième élément magnétique (303), le premier élément magnétique (232) et le deuxième élément magnétique (303) interagissant par attraction magnétique lors de l'application du module de fermeture (2) et de la partie de couplage (3) l'un contre l'autre.

13. Dispositif de liaison (1) selon l'une quelconque des revendications précédentes, **caractérisé en ce que** le module de fermeture (2) présente un élément de dépression (27) qui peut être appliqué sur le deuxième des ensembles (5, 6) pour établir une liaison entre les ensembles (5, 6) et qui est conçu pour fournir, dans une position reliée, une force de maintien entre les ensembles (5, 6) par l'action de la dépression, l'élément de dépression (27) étant formé en particulier par un élément en forme de coupelle élastique au moins par sections.

14. Dispositif de liaison (1) selon la revendication 13, **caractérisé en ce que** le module de fermeture (2) comprend un boîtier (20) et une ouverture d'écoulement (201) formée dans le boîtier (20) pour libérer un chemin d'écoulement dans un espace entre le deuxième des ensembles (5, 6) et l'élément de dépression (22), l'ouverture d'écoulement (201) étant formée en particulier dans un fond (200) du boîtier (20) bordé par l'élément de dépression (22).
